# EUROPÄISCHE PATENTSCHRIFT

(11) **EP 1 238 463 B1**
(45) Veröffentlichungstag und Bekanntmachung des Hinweises auf die Patenterteilung: **02.03.2005**
(21) Anmeldenummer: 00990539.9
(22) Anmeldetag: 15.12.2000
(51) Int. Cl.: H04B 1/00

(54) **VERFAHREN UND ANORDNUNG ZUR ÜBERTRAGUNG VON DATEN UND ZUR BESTIMMUNG DER ÜBERTRAGUNGSEIGENSCHAFTEN IN EINEM FUNK-KOMMUNIKATIONSSYSTEM**
METHOD AND SYSTEM FOR TRANSMITTING DATA AND FOR DETERMINING THE TRANSMISSION PROPERTIES IN A RADIO COMMUNICATIONS SYSTEM
PROCEDE ET SYSTEME DE TRANSMISSION DE DONNEES ET DE DETERMINATION DES CARACTERISTIQUES DE TRANSMISSION DANS UN SYSTEME DE RADIOCOMMUNICATION

(30) Priorität: 15.12.1999 DE 19960545
(43) Veröffentlichungstag der Anmeldung: 11.09.2002
(73) Patentinhaber: SIEMENS AKTIENGESELLSCHAFT, 80333 München (DE)
(72) Erfinder: DILLINGER, Markus, 81737 München (DE); SCHINDLER, Jürgen, 10555 Berlin (DE); SCHULZ, Egon, 80993 München (DE)
(86) Internationale Anmeldenummer: PCT/DE2000/004485
(87) Internationale Veröffentlichungsnummer: WO 2001/045274

(56) Entgegenhaltungen:
- EP-A- 0 996 306
- EP-A- 1 037 489
- US-A- 5 752 164
- PATENT ABSTRACTS OF JAPAN vol. 1998, no. 08, 30. Juni 1998 (1998-06-30) -& JP 10 070501 A (NEC CORP), 10. März 1998 (1998-03-10) -& US 6 044 266 A (KATO HIDENORI) 28. März 2000 (2000-03-28)

## Beschreibung

Die vorliegende Erfindung betrifft ein Verfahren und eine Anordnung zur Übertragung von Daten und zur Bestimmung der Übertragungseigenschaften in einem Funk-Kommunikationssystem.

In Funk-Kommunikationssystemen werden Daten wie Signalisierungsdaten, Sprachdaten oder andere Nutzdaten zumindest in einem Teilbereich des Kommunikationssystems mit Hilfe elektromagnetischer Wellen über eine Funkschnittstelle zwischen der sendenden und der empfangenden Einrichtung übertragen. Ein Beispiel für aktuelle Funk-Kommunikationsnetze sind Netze nach dem GSM-Standard und mit einem TDMA-Übertragungsverfahren, die bei Trägerfrequenzen von 900, 1800 oder 1900 MHz betrieben werden. Ein weiteres Beispiel sind zukünftige Funk-Kommunikationssysteme wie UMTS, welches auf einem CDMA-, TD/CDMA- oder TDD-Übertragungsverfahren basiert und Trägerfrequenzen im Bereich von ca. 2000 MHz nutzt. Auf diesen Trägerfrequenzen werden die zu übertragenden Daten zwischen netzseitigen Basisstationen des Kommunikationssystems und teilnehmerseitigen mobilen oder stationären Endgeräten übertragen.

Spezielle Funk-Kommunikationssysteme sind solche, die eine Zeitschlitzstruktur aufweisen. Die Zeitschlitze sind dabei in der Regel in Zeitschlitzrahmen zusammen gefaßt, die wiederum Teil einer höheren Rahmenstruktur sein können. Beispiele für solche Funk-Kommunikationssysteme mit einer Zeitschlitzstruktur sind TDMA-, TDD-, TD/CDMA-, TD/SDCDMA-und FDD-Systeme. Im Falle eines GSM-Systems sind beispielsweise acht Zeitschlitze in einem Zeitschlitzrahmen zusammengefaßt. Jeder einzelne Zeitschlitz weist eine Dauer von 0,577 ms auf, der gesamte Zeitschlitzrahmen eine Dauer von etwa 4,6 ms.

In einem TDD-System im Rahmen von UMTS dagegen weist ein Zeitschlitzrahmen 16 Zeitschlitze auf, die jeweils eine Dauer von 625 µs besitzen. Der gesamte Zeitschlitzrahmen weist dabei eine Dauer von 10 ms auf. Ein Teil der Zeitschlitze eines TDD-Zeitschlitzrahmens wird für die Aufwärts-Verbindung vom teilnehmerseitigen Endgerät zur Basisstation verwendet, das heißt für den sogenannten Uplink, der andere Teil der Zeitschlitze des Zeitschlitzrahmens wird für die Abwärts-Verbindung von der Basisstation zum teilnehmerseitigen Endgerät, also für den sogenannten Downlink, verwendet. Zwischen den Zeitschlitzen der Aufwärts- und der Abwärts-Verbindung wird mindestens ein Umschaltpunkt eingefügt, der innerhalb des Zeitschlitzrahmens verschoben werden kann, um eine asymmetrische Zuteilung der Zeitschlitze zu der Aufwärts-Verbindung und zu der Abwärts-Verbindung zu ermöglichen.

Innerhalb eines Zeitschlitzes wird ein Datenblock oder Burst mit einer bestimmten, vordefinierten Struktur übertragen. Der Datenblock kann neben Nutzdaten noch weitere Daten beinhalten, die für die Übertragung der Nutzdaten notwendig oder hilfreich sind. So können beispielsweise Kontroll- oder Signalisierungsdaten oder auch bestimmte Meßdaten wie beispielsweise zur Bestimmung der Übertragungseigenschaften in diesen Datenblöcken vorgesehen sein.

Ein vornehmliches Ziel bei Funk-Kommunikationssystemen ist es, den' Teilnehmern ein möglichst hohes Maß an Komfort bereitzustellen. Insbesondere soll den Teilnehmern einerseits eine möglichst gute Qualität der Datenübertragung gewährleistet werden, andererseits soll eine möglichst hohe Datenrate durch entsprechende Übertragungskapazität zur Verfügung gestellt werden. Diese Anforderungen stellen gerade in Hinblick auf die stetig wachsenden Teilnehmerzahlen in Funk-Kommunikationssystemen ein zunehmendes Problem dar.

EP-A-1 037 489 behandelt ein Verfahren zur Information von Mobilteilen über die aktuell verfügbaren Übertragungsressourcen. Die Ressourcen information wird erst nach einer Änderung ihres Inhalts ausgesendet.

Aufgabe der vorliegenden Erfindung ist es daher, eine Möglichkeit zur Übertragung von Daten und zur Bestimmung von Übertragungseigenschaften in einem Funk-Kommunikationssystem bereitzustellen, die eine möglichst gute Qualität der Datenübertragung bei gleichzeitig hoher Übertragungskapazität erlaubt.

Diese Aufgabe wird gelöst durch die Merkmale der vorliegenden Patentansprüche 1, 13, 14 und 15.

Bei dem erfindungsgemäßen Verfahren nach Anspruch 1 zur Übertragung von Daten über eine Funkverbindung mit einer Zeitschlitzstruktur in einem Funk-Kommunikationssystem mit mindestens einer Basisstation und mindestens einem teilnehmerseitigen Endgerät werden innerhalb der Zeitschlitzstruktur Meßdaten zur Bestimmung der Übertragungseigenschaften der Funkverbindung vorgesehen. Die Meßdaten werden dabei erfindungsgemäß in Abhängigkeit von der zeitlichen Variation der Übertragungseigenschaften der Funkverbindung zwischen der Basisstation und dem teilnehmerseitigen Endgerät in die Zeitschlitzstruktur eingefügt.

Es müssen somit nicht ständig eine bestimmte Menge der insgesamt über die Funkverbindung übertragbaren Daten für Messungen der Übertragungseigenschaften bereitgehalten werden. Die Meßdaten werden vielmehr nach den individuellen Gegebenheiten der jeweiligen Funkverbindung in die Zeitschlitzstruktur eingefügt. Ist erkennbar, daß sich die individuellen Gegebenheiten der Funkverbindung kaum verändern, so ist eine ständige Übertragung von Meßdaten zur ständigen Überprüfung der Übertragungseigenschaften der Funkverbindung nicht erforderlich. Die für die Meßdaten notwendige Datenmenge kann somit weitgehend eingespart werden und für andere Daten wie Nutzdaten oder Signalisierungsdaten zur Verfügung gestellt werden. Man erhält somit eine Erhöhung der Übertragungskapazität des Funk-Kommunikationssystems ohne wesentliche Beeinträchtigung der Qualität der Funkverbindung.

Es können im Rahmen der Funkverbindung zwischen der Basisstation und dem Endgerät ein oder mehrere Kanäle zwischen der Basisstation und dem Endgerät übertragen werden. Entsprechend kann die Bestimmung der Übertragungseigenschaften und die davon abhängige Einfügung oder Einsparung von Meßdaten auf demselben Kanal erfolgen oder es kann ein Kanal zur Bestimmung der Übertragungseigenschaften benutzt werden und in Abhängigkeit davon auf einem oder mehreren anderen Kanälen Meßdaten eingespart werden. Letzteres ist z.B. dann sinnvoll, wenn die Vermessung eines Kanals, beispielsweise eines Signalisierungskanals, bereits Aufschluß über die Ubertragungseigenschaften auf den anderen Kanälen, beispielsweise auf Verkehrskanälen, gibt.

Die Übertragungseigenschaften der Funkverbindung zwischen der Basisstation und dem teilnehmerseitigen Endgerät kann durch unterschiedliche Größen beeinflußt werden. So können sich durch unterschiedliche Faktoren die Qualität oder die Laufzeiten der Funkverbindung ändern. Beispiele für die Funkverbindung beeinflussende Größen, die zeitlich variieren können und dadurch eine zeitliche Variation der Übertragungseigenschaften bewirken können, sind der Ort des teilnehmerseitigen Endgerätes, nämlich bei einem mobilen Endgerät, das sich mit einer bestimmten Relativgeschwindigkeit gegenüber der Basisstation bewegen kann, oder auch externe Störungen der Funkverbindung wie beispielsweise durch Überlagerungen mit anderen Funkverbindungen oder durch Abschattungen durch bewegliche Objekte wie beispielsweise vorbeifahrende Fahrzeuge. Es kann vorgesehen werden, daß die zeitliche Variation der Größen ermittelt wird, die die Übertragungseigenschaften beeinflussen, um in Abhängigkeit von der zeitlichen Variation dieser Größen eine Einfügung oder Einsparung von Meßdaten vorzunehmen.

Wird speziell die zeitliche Variation des Aufenthaltsortes des teilnehmerseitigen Endgerätes, insbesondere dabei die Relativgeschwindigkeit zwischen der Basisstationen und dem teilnehmerseitigen Endgerät betrachtet, so kann vorgesehen werden, daß Meßdaten dann in die Zeitschlitzstruktur eingefügt werden, wenn die Relativgeschwindigkeit eine vordefinierte Grenzgeschwindigkeit überschreitet. Damit kann erreicht werden, daß gerade für den Fall sich nicht oder nur langsam bewegender Endgeräte grundsätzlich während einer bestehenden Funkverbindung keine Meßdaten übertragen werden müssen. Zu bestimmten Zeiten können jedoch ein- oder mehrmals Meßdaten übertragen werden, um zumindest einmal die Übertragungseigenschaften der Funkverbindung zu ermitteln. Insbesondere kann eine solche Messung bevorzugt zu Beginn einer Funkverbindung erfolgen. Diese Einfügung von Meßdaten zu Beginn einer Funkverbindung kann auch für alle anderen Fälle von Funkverbindungen, die durch zeitlich variable Größen beeinflußt werden, als Standard vorgesehen werden. Es werden dabei die Meßdaten in eine vordefinierte Anzahl von Zeitschlitzen eingefügt, in alle weiteren Zeitschlitze erfolgt eine Einfügung von Meßdaten jedoch nur in Abhängigkeit von der zeitlichen Variation der Übertragungseigenschaften bzw. der sie beeinflussenden Größen.

Insbesondere kann dabei vorgesehen werden, daß mit zunehmender zeitlicher Variation der Übertragungseigenschaften der Funkverbindung, insbesondere durch eine zunehmende zeitlicher Variation der die Übertragungseigenschaften beeinflussenden Größen, die Meßdaten in eine zunehmende Anzahl von Zeitschlitzen der Zeitschlitzstruktur eingefügt werden. Man erreicht damit, daß sich die Bestimmung der Übertragungseigenschaften an das Ausmaß der zeitlichen Variation der Übertragungseigenschaften der Funkverbindung anpaßt und mit einer größeren Anzahl von Messungen auf sich schneller ändernde Übertragungseigenschaften reagiert werden kann. Umgekehrt können natürlich auch bei abnehmender zeitlicher Variation der Übertragungseigenschaften der Funkverbindung bzw. der sie beeinflussenden Größen die Meßdaten in eine abnehmende Anzahl von Zeitschlitzen der Zeitschlitzstruktur eingefügt werden.

Nimmt also mit der Zeit die zeitliche Beeinflussung der Funkverbindung ab, so können die Meßdaten wieder verstärkt eingespart werden und die freiwerdende Datenmenge für andere Anwendungen wie Nutzdaten oder Signalisierungsdaten zur Verfügung gestellt werden. In beiden Fällen kann eine gewisse Hysterese vorgesehen werden, d.h. die erhöhte oder verringerte zeitliche Variation muß sich zunächst über einen gewissen Zeitraum stabilisiert haben, bevor das System mit dem Einfügen oder Einsparen von Meßdaten reagiert.

Wie bereits vorstehend beschrieben, erreicht man somit die Austauschbarkeit von Meßdaten einerseits und Nutzdaten oder Signalisierungsdaten andererseits. Wird ein bestimmter Datenbereich beziehungsweise eine bestimmte Datenmenge nicht für Meßdaten benötigt, so kann sie für Nutzdaten oder Signalisierungsdaten zur Verfügung gestellt werden, wodurch die Übertragungskapazität der Funkverbindung gesteigerten werden kann. Wird jedoch erkannt, daß zusätzliche Meßdaten in die Zeitschlitzstruktur eingefügt werden müssen, um beispielsweise die Qualität der Verbindung garantieren zu können, so werden die Meßdaten an Stelle eines bestimmten Teils der Nutzdaten oder Signalisierungsdaten in die Zeitschlitzstruktur eingefügt.

Die vorliegende Erfindung umfaßt außerdem eine Anordnung zur Übertragung von Daten über eine Funkverbindung mit einer Zeitschlitzstruktur nach Anspruch 12, die insbesondere zur Durchführung eines vorstehend beschriebenen Verfahrens ausgebildet ist, wobei die Anordnung Einrichtungen zur Ermittlung der zeitlichen Variation der Übertragungseigenschaften der Funkverbindung zwischen der Basisstation und dem teilnehmerseitigen Endgerät aufweist. Diese Einrichtungen sind gekoppelt mit Einrichtungen zur Einfügung von Meßdaten in die Zeitschlitzstruktur.

Ein weiterer Gegenstand der vorliegenden Erfindung ist ein Funk-Kommunikationssystem nach Anspruch 13, welches mindestens eine vorstehend beschriebene Anordnung zur Übertragung von Daten über eine Funkverbindung mit einer Zeitschlitzstruktur aufweist.

Schließlich umfaßt die vorliegende Erfindung auch eine Basisstation für ein Funk-Kommunikationssystem nach Anspruch 14, die eine vorstehend beschriebene Anordnung zur Übertragung von Daten eine Funkverbindung mit einer Zeitschlitzstruktur aufweist. In diesem Fall kann beispielsweise vorgesehen sein, daß die Einrichtungen zur Ermittlung der zeitlichen Variation der Übertragungseigenschaften lediglich als Auswerte-Einrichtungen ausgebildet sind, die Meßergebnisse einer anderen Einrichtung, beispielsweise eines teilnehmerseitigen Endgerätes, auswerten.

Ein spezielles Ausführungsbeispiel der vorliegenden Erfindung wird nachfolgend anhand der Figuren 1 bis 5 erläutert. Es zeigen:
Figur 1: Schematische Darstellung eines erfindungsgemäßen Funk-Kommunikationssystems.
Figur 2: Schematische Darstellung einer Zeitschlitzstruktur eines TDD-Systems.
Figur 3: Schematische Darstellung eines Zeitschlitzrahmens des TDD-Systems mit Meßdaten.
Figur 4: Zeitschlitzrahmen nach Figur 3, jedoch mit Nutzdaten an Stelle der Meßdaten.
Figur 5: Zeitschlitzrahmen nach Figur 3, jedoch mit Signalisierungsdaten an Stelle der Meßdaten.

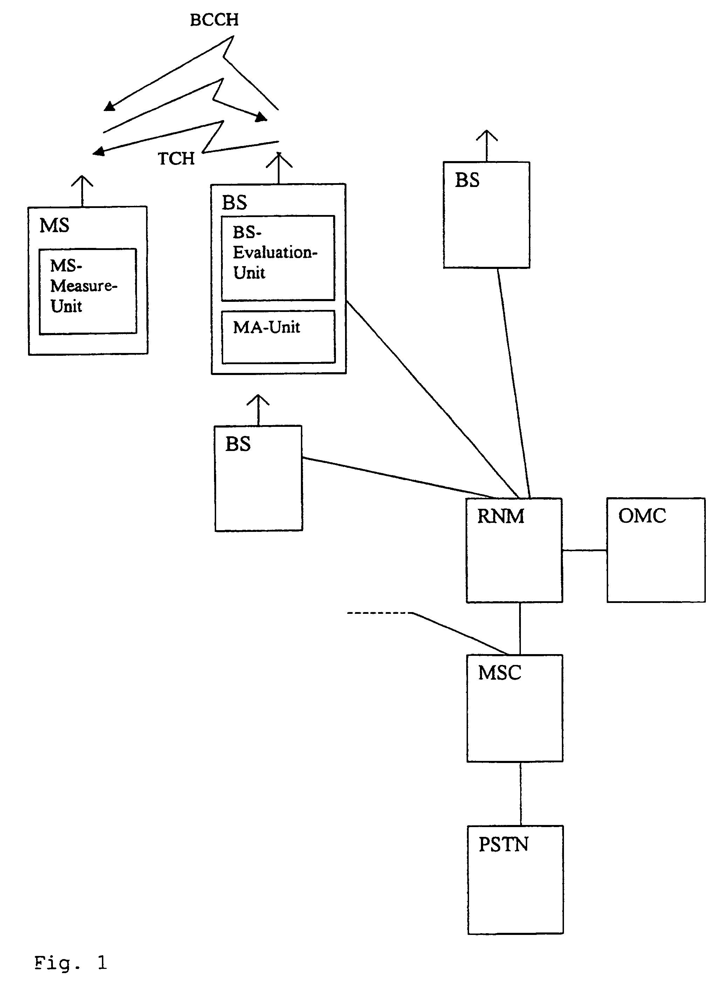

In Figur 1 ist ein Mobilfunksystem als Beispiel für ein Funk-Kommunikationssystem dargestellt, das eine Vielzahl von Mobilvermittlungsstellen MSC aufweist, die miteinander verbunden sind und von denen zumindest eine einen Zugang zu weiteren Kommunikationsnetzen wie beispielsweise einem Festnetz PSTN bildet. Außerdem sind die Mobilvermittlungsstellen MSC mit einer Einrichtung RNM zum Zuteilen von Ressourcen im Mobilfunksystem verbunden, an die verschiedene Basisstationen BS angebunden sind. Weiterhin weist das Mobilfunksystem ein Operations- und Wartungszentrum OMC auf, daß ebenfalls mit der RNM verbunden ist.

Die Basisstationen BS weisen neben anderen Funktionen vor allem eine Einrichtung zur Bestimmung der Übertragungseigenschaften von Funkverbindungen zwischen der Basisstation BS und den teilnehmerseitigen Endgeräten MS auf. Sie ist im vorliegenden Beispiel lediglich als Auswerte-Einrichtung ausgebildet, da die eigentliche Messung an anderer Stelle erfolgt, nämlich im teilnehmerseitigen Endgerät MS. Die Auswerte-Einrichtung der Basisstation BS sei deshalb in Figur 1 allgemein als BS-Evaluation Unit bezeichnet. Die Basisstation sendet einen Signalisierungskanal BCCH (Broadcast Control Channel)aus, der von den teilnehmerseitigen Endgeräten, beispielsweise von einer Mobilstation MS erfaßt und vermessen wird. Das Endgerät MS weist hierzu entsprechende Meßeinrichtungen auf, die in Figur 1 allgemein als MS-Measure Unit bezeichnet sind. Mit diesen Meßeinrichtungen kann das Endgerät MS die zeitliche Variation der Übertragungseigenschaften der Funkverbindung ermitteln. Die entsprechenden Ergebnisse können automatisch oder auf Abfrage an die BS-Evaluation Unit übertragen werden. In der Basisstation könnte nun aus den Ergebnissen der Messung z.B. die Relativgeschwindigkeit zwischen dem teilnehmerseitigen Endgerät und der Basisstation ermittelt werden. In Abhängigkeit von den Ergebnissen der Messung werden durch eine mit der BS-Measure Unit gekoppelten Einrichtung, die in Figur 1 allgemein als MA-Unit bezeichnet ist, Meßdaten MA (Midamble) in geeigneter Form in die Zeitschlitzstruktur einer Funkverbindung zur Übertragung von Nutzdaten eingefügt. Diese Nutzdaten werden auf einem separaten Kanal, nämlich einem Verkehrskanal TCH, übertragen. Wenn erkannt wird, daß sich die Übertragungseigenschaften der Funkverbindung kaum ändern, so können zumindest auf dem Verkehrskanal die Meßdaten MA, die dort ebenso wie auf dem Signalisierungskanal BCCH vorgesehen wären, eingespart werden.

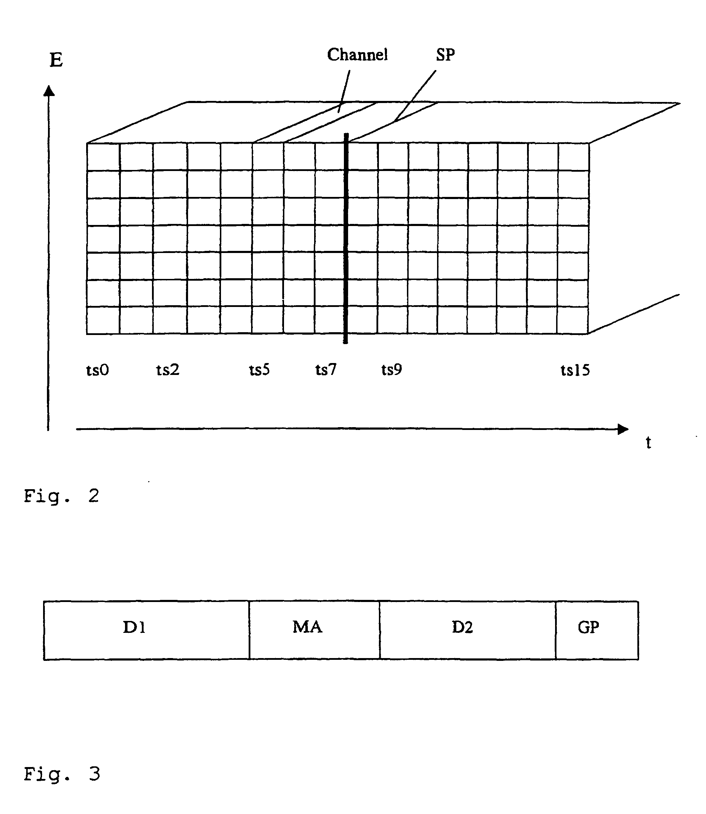

Figur 2 zeigt eine Zeitschlitzstruktur eines TDD-Systems, bei dem ein Zeitschlitzrahmen 16 Zeitschlitze ts0 bis ts15 umfaßt. In Figur 1 sind die ersten acht Zeitschlitze ts0 bis ts7 der Abwärts-Verbindung (Downlink) zugeordnet, die übrigen Zeitschlitze ts8 bis ts15 nach dem Umschaltpunkt SP (Switching Point) sind der Aufwärts-Verbindung (Uplink) zugeordnet. Es können innerhalb eines solchen Zeitschlitzrahmens auch mehrere Umschaltpunkte SP vorgesehen werden und diese Umschaltpunkte können an unterschiedlichen Stellen in den Zeitschlitzrahmen eingefügt werden.

Figur 3 zeigt die Aufteilung eines Datenblocks (Burst), der innerhalb eines Zeitschlitzes übertragen wird. Dieser Datenblock umfaßt eine erste Menge von Nutzdaten D1, gefolgt von Meßdaten MA, einer zweiten Menge von Nutzdaten D2 und Kontrolldaten GP zur Überprüfung einer fehlerfreien Übertragung der Nutzdaten.

Wird durch die entsprechenden Meßeinrichtungen im Funk-Kommunikationssystem festgestellt, daß sich die Übertragungseigenschaften der Funkverbindung zwischen der Basisstation BS und dem teilnehmerseitigen Endgerät MS bzw. die sie beeinflussenden Größen mit der Zeit nur wenig ändern, so kann auf die Meßdaten innerhalb der einzelnen Zeitschlitze zumindest des Verkehrskanals TCH der entsprechenden Funkverbindung weitgehend verzichtet werden. Diese Situation ist in den weiteren Figuren dargestellt.

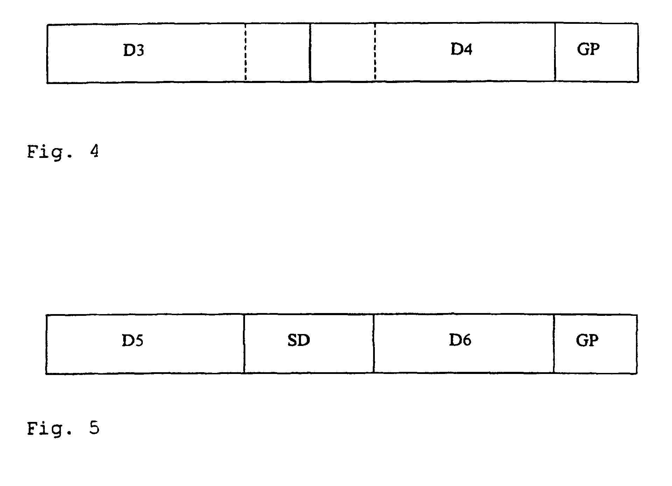

Figur 4 zeigt einen Datenblock, in welchem an Stelle der Meßdaten MA weitere Nutzdaten übertragen werden. Es können somit innerhalb dieses Datenblock größere Mengen von Nutzdaten D3, D4 übertragen werden als in dem Datenblock nach Figur 3.

Figur 5 zeigt eine Alternative zu Figur 4, wobei die Meßdaten des Datenblocks aus Figur 3 durch zusätzliche Signalisierungsdaten SD ersetzt wurden, die somit z.B. eine Inband-Signalisierung ermöglichen.

Wie aus den Figuren 4 und 5 ersichtlich wird, kann für die Fälle, in denen sich die Übertragungseigenschaften der Funkverbindung zwischen der Basisstation BS und dem Endgerät MS, bzw. die die Übertragungseigenschaften beeinflussenden Größen, nur wenig ändern, wie beispielsweise im Falle einer sich nur langsam oder überhaupt nicht bewegenden Mobilstation MS, weitgehend auf die Vorsehung von Meßdaten innerhalb der Zeitschlitze der entsprechenden Verbindung oder zumindest in einem Teil der Kanäle der Verbindung verzichtet werden. Folge ist eine deutliche Erhöhung der Übertragungskapazität der entsprechenden Verbindung.

## Patentansprüche

1. Verfahren zur Übertragung von Daten über eine Funkverbindung mit einer Zeitschlitzstruktur in einem Funk-Kommunikationssystem mit mindestens einer Basisstation (BS) und mindestens einem teilnehmerseitigen Endgerät (MS), wobei innerhalb der Zeitschlitzstruktur Meßdaten (MA) zur Bestimmung der Übertragungseigenschaften der Funkverbindung eingefügt werden,
**dadurch gekennzeichnet,**
**daß** die Meßdaten (MA) in Abhängigkeit von der zeitlichen Variation der Übertragungseigenschaften der Funkverbindung zwischen der Basisstation (BS) und dem teilnehmerseitigen Endgerät (MS) in die Zeitschlitzstruktur eingefügt werden.

2. Verfahren nach Anspruch 1,
**dadurch gekennzeichnet,**
**daß** für die Funkverbindung mehrere Kanäle (BCCH, TCH) vorgesehen werden und die Bestimmung der Übertragungseigenschaften und die Einfügung der Meßdaten (MA) auf demselben Kanal (BCCH, TCH) erfolgen.

3. Verfahren nach Anspruch 1,
**dadurch gekennzeichnet,**
**daß** für die Funkverbindung mehrere Kanäle (BCCH, TCH) vorgesehen werden und die Bestimmung der Übertragungseigenschaften und die Einfügung der Meßdaten (MA) auf unterschiedlichen Kanälen (BCCH, TCH) erfolgen.

4. Verfahren nach einem der Ansprüche 1 bis 3,
**dadurch gekennzeichnet,**
**daß** bei der Bestimmung der zeitlichen Variation der Übertragungseigenschaften eine Bestimmung der zeitlichen Variation von die Übertagungseigenschaften beeinflussenden Größen erfolgt.

5. Verfahren nach Anspruch 4,
**dadurch gekennzeichnet ,**
**daß** die Meßdaten (MA) in Abhängigkeit von externen Störungen der Funkverbindung zwischen der Basisstation (BS) und dem teilnehmerseitigen Endgerät (MS) in die Zeitschlitzstruktur eingefügt werden.

6. Verfahren nach Anspruch 4,
**dadurch gekennzeichnet,**
**daß** die Meßdaten (MA) in Abhängigkeit von der Relativgeschwindigkeit zwischen der Basisstation (BS) und dem teilnehmerseitigen Endgerät (MS) in die Zeitschlitzstruktur eingefügt werden.

7. Verfahren nach Anspruch 6,
**dadurch gekennzeichnet,**
**daß** die Meßdaten (MA) in die Zeitschlitzstruktur eingefügt werden, sobald die Relativgeschwindigkeit zwischen der Basisstation (BS) und dem teilnehmerseitigen Endgerät (MS) eine vordefinierte Grenzgeschwindigkeit überschreitet.

8. Verfahren nach einem der Ansprüche 1 bis 7,
**dadurch gekennzeichnet,**
**daß** mit zunehmender zeitlicher Variation der Übertragungseigenschaften der Funkverbindung Meßdaten (MA) in eine zunehmende Anzahl von Zeitschlitzen (ts0 - ts15) der Zeitschlitzstruktur eingefügt werden.

9. Verfahren nach einem der Ansprüche 1 bis 8,
**dadurch gekennzeichnet,**
**daß** mit abnehmender zeitlicher Variation der Übertragungseigenschaften der Funkverbindung Meßdaten (MA) in eine abnehmende Anzahl von Zeitschlitzen (ts0 - ts15) der Zeitschlitzstruktur eingefügt werden.

10. Verfahren nach einem der Ansprüche 1 bis 9,
**dadurch gekennzeichnet ,**
**daß** zu Beginn einer Funkverbindung stets Meßdaten (MA) in eine vordefinierte Anzahl von Zeitschlitzen (ts0 - ts15) eingefügt werden.

11. Verfahren nach einem der Ansprüche 1 bis 10,
**dadurch gekennzeichnet,**
**daß** beim Einfügen der Meßdaten (MA) in die Zeitschlitze die Meßdaten (MA) an Stelle von Nutzdaten (D1 - D6) oder Signalisierungsdaten (SD) in die Zeitschlitze (ts0 - ts15) eingefügt werden.

12. Verfahren nach einem der Ansprüche 1 bis 11,
**dadurch gekennzeichnet,**
**daß** die Meßdaten (MA) jeweils als eine Präambel oder Mittambel in die Zeitschlitze (ts0 - ts15) eingefügt werden.

13. Anordnung zur Übertragung von Daten über eine Funkverbindung mit einer Zeitschlitzstruktur, insbesondere zur Durchführung eines Verfahrens nach einem der Ansprüche 1 bis 11,
**dadurch gekennzeichnet,**
**daß** die Anordnung Einrichtungen zur Ermittlung der zeitlichen Variation der Übertragungseigenschaften der Funkverbindung zwischen der Basisstation (BS) und dem teilnehmerseitigen Endgerät (MS) aufweist, welche mit Einrichtungen zur Einfügung von Meßdaten (MA) in Abhängigkeit von der zeitlichen Variation der Übertragungseigenschaften der Funkverbindung in die Zeitschlitzstruktur gekoppelt sind.

14. Funk-Kommunikationssystem, aufweisend mindestens eine Anordnung nach Anspruch 13.

15. Basisstation für ein Funk-Kommunikationssystem, aufweisend eine Anordnung nach Anspruch 13.

16. Basisstation nach Anspruch 15,
**dadurch gekennzeichnet ,**
**daß** die Einrichtungen zur Ermittlung der zeitlichen Variation der Übertragungseigenschaften als Auswerte-Einrichtungen zur Auswertung von Meßergebnissen externer Einrichtung, insbesondere eines teilnehmerseitigen Endgerätes, ausgebildet sind.

## Claims

1. Method for transmitting data via a radio link with a timeslot structure in a radio communications system with at least one base station (BS) and at least one terminal (MS) at the subscriber end, with measured data (MA) for determining the transmission characteristics of the radio link being inserted within the timeslot structure, **characterized in that** the measured data (MA) is inserted into the timeslot structure as a function of the variation with time of the transmission characteristics of the radio link between the base station (BS) and the terminal (MS) at the subscriber end.

2. Method according to Claim 1, **characterized in that** a number of channels (BCCH, TCH) are provided for the radio link, and the determination of the transmission characteristics and the insertion of the measured data (MA) take place on the same channel (BCCH, TCH).

3. Method according to Claim 1, **characterized in that** a number of channels (BCCH, TCH) are provided for the radio link, and the determination of the transmission characteristics and the insertion of the measured data (MA) take place on different channels (BCCH, TCH).

4. Method according to one of Claims 1 to 3, **characterized in that**, the variation with time of variables influencing the transmission characteristics is determined during the determination of the variation with time of the transmission characteristics.

5. Method according to Claim 4, **characterized in that** the measured data (MA) is inserted into the timeslot structure as a function of external disturbances on the radio link between the base station (BS) and the terminal (MS) at the subscriber end.

6. Method according to Claim 4, **characterized in that** the measured data (MA) is inserted into the timeslot structure as a function of the relative speed between the base station (BS) and the terminal (MS) at the subscriber end.

7. Method according to Claim 6, **characterized in that** the measured data (MA) is inserted into the timeslot structure as soon as the relative speed between the base station (BS) and the terminal (MS) at the subscriber end exceeds a predetermined limit speed.

8. Method according to one of Claims 1 to 7, **characterized in that** measured data (MA) is inserted into an increasing number of timeslots (ts0-ts15) in the timeslot structure as the variation with time of the transmission characteristics of the radio link increases.

9. Method according to one of Claims 1 to 8, **characterized in that** measured data (MA) is inserted into a decreasing number of timeslots (ts0-ts15) in the timeslot structure as the variation with time of the transmission characteristics of the radio link decreases.

10. Method according to one of Claims 1 to 9, **characterized in that** measured data (MA) is always inserted into a predetermined number of timeslots (ts0-ts15) at the start of a radio link.

11. Method according to one of Claims 1 to 10, **characterized in that**, when the measured data (MA) is inserted into the timeslots, the measured data (MA) is inserted into the timeslots (ts0-ts15) instead of payload data (D1-D6) or signalling data (SD).

12. Method according to one of Claims 1 to 11, **characterized in that** the measured data (MA) is in each case inserted into the timeslots (ts0-ts15) as a preamble or midamble.

13. Arrangement for transmitting data via a radio link with a timeslot structure, particularly for carrying out a method according to one of Claims 1 to 11, **characterized in that** the arrangement has devices for determining the variation with time of the transmission characteristics of the radio link between the base station (BS) and the terminal (MS) at the subscriber end, which are coupled to devices for inserting measured data (MA) into the timeslot structure as a function of the variation with time of the transmission characteristics of the radio link.

14. Radio communications system having at least one arrangement according to Claim 13.

15. Base station for a radio communications system having an arrangement according to Claim 13.

16. Base station according to Claim 15, **characterized in that** the devices for determining the variation with time of the transmission characteristics are in the form of evaluating devices for evaluating measurement results from an external device, particularly from a terminal at the subscriber end.

## Revendications

1. Procédé de transmission de données sur une liaison radio avec une structure de créneaux temporels dans un système de radiocommunication comprenant au moins une station de base (BS) et au moins un terminal (MS) côté abonné, des données de mesure (MA) étant insérées à l'intérieur de la structure de créneaux temporels pour déterminer les caractéristiques de transmission de la liaison radio, **caractérisé en ce que** les données de mesure (MA) sont insérées dans la structure de créneaux temporels en fonction de la variation temporelle des caractéristiques de transmission de la liaison radio entre la station de base (BS) et le terminal (MS) côté abonné.

2. Procédé selon la revendication 1, **caractérisé en ce que** plusieurs canaux (BCCH, TCH) sont prévus pour la liaison radio et la détermination des caractéristiques de transmission et l'insertion des données de mesure (MA) se font sur le même canal (BCCH, TCH).

3. Procédé selon la revendication 1, **caractérisé en ce que** plusieurs canaux (BCCH, TCH) sont prévus pour la liaison radio et la détermination des caractéristiques de transmission et l'insertion des données de mesure (MA) se font sur différents canaux (BCCH, TCH).

4. Procédé selon l'une des revendications 1 à 3, **caractérisé en ce qu'**il est procédé, lors de la détermination de la variation temporelle des caractéristiques de transmission, à une détermination de la variation temporelle de grandeurs qui influencent les caractéristiques de transmission.

5. Procédé selon la revendication 4, **caractérisé en ce que** les données de mesure (MA) sont insérées dans la structure de créneaux temporels en dépendance de perturbations externes de la liaison radio entre la station de base (BS) et le terminal (MS) côté abonné.

6. Procédé selon la revendication 4, **caractérisé en ce que** les données de mesure (MA) sont insérées dans la structure de créneaux temporels en dépendance de la vitesse relative entre la station de base (BS) et le terminal (MS) côté abonné.

7. Procédé selon la revendication 6, **caractérisé en ce que** les données de mesure (MA) sont insérées dans la structure de créneaux temporels dès que la vitesse relative entre la station de base (BS) et le terminal (MS) côté abonné dépasse une vitesse limite prédéfinie.

8. Procédé selon l'une des revendications 1 à 7, **caractérisé en ce que** des données de mesure (MA) sont insérées dans un nombre croissant de créneaux temporels (ts0 - ts15) de la structure de créneaux temporels à mesure que la variation temporelle des caractéristiques de transmission de la liaison radio augmente.

9. Procédé selon l'une des revendications 1 à 8, **caractérisé en ce que** des données de mesure (MA) sont insérées dans un nombre décroissant de créneaux temporels (ts0 - ts15) de la structure de créneaux temporels à mesure que la variation temporelle des caractéristiques de transmission de la liaison radio diminue.

10. Procédé selon l'une des revendications 1 à 9, **caractérisé en ce que**, au début d'une liaison radio, des données de mesure (MA) sont toujours insérées dans un nombre prédéfini de créneaux temporels (ts0 - ts15).

11. Procédé selon l'une des revendications 1 à 10, **caractérisé en ce que**, lors de l'insertion des données de mesure (MA) dans les créneaux temporels, les données de mesure (MA) sont insérées au lieu de données utiles (D1 - D6) ou de données de signalisation (SD) dans les créneaux temporels (ts0 - ts15).

12. Procédé selon l'une des revendications 1 à 11, **caractérisé en ce que** les données de mesure (MA) sont respectivement insérées en tant que préamble ou midamble dans les créneaux temporels (ts0 - ts15).

13. Système de transmission de données sur une liaison radio avec une structure de créneaux temporels, en particulier pour l'exécution d'un procédé selon l'une des revendications 1 à 11, **caractérisé en ce que** l'ensemble comprend des dispositifs de détermination de la variation temporelle des caractéristiques de transmission de la liaison radio entre la station de base (BS) et le terminal (MS) côté abonné, lesquels sont couplés à des dispositifs d'insertion de données de mesure (MA) dans la structure de créneaux temporels en fonction de la variation temporelle des caractéristiques de transmission de la liaison radio.

14. Système de radiocommunication, comportant au moins un ensemble selon la revendication 13.

15. Station de base pour un système de radiocommunication, comportant un ensemble selon la revendication 13.

16. Station de base selon la revendication 15, **caractérisée en ce que** les dispositifs de détermination de la variation temporelle des caractéristiques de transmission sont réalisés en tant que dispositifs d'évaluation pour l'évaluation de résultats de mesure d'un dispositif externe, en particulier d'un terminal côté abonné.
